# EUROPÄISCHE PATENTANMELDUNG

(11) **EP 4 094 985 A1**
(43) Veröffentlichungstag der Anmeldung: **30.11.2022**
(21) Anmeldenummer: 21176636.5
(22) Anmeldetag: 28.05.2021
(51) Int. Cl.: B60P 3/41, B62D 33/077, B62D 33/02

(54) **HILFSRAHMEN FÜR EIN FAHRZEUG**

(71) Anmelder: EPSILON Kran GmbH., 5020 Salzburg (AT)
(72) Erfinder: Die Erfindernennung liegt noch nicht vor
(74) Vertreter: Torggler & Hofmann Patentanwälte - Innsbruck

(57) **Zusammenfassung**

Hilfsrahmen (1) für ein Fahrzeug (2), insbesondere Forstanhänger oder Holztransporter, wobei der Hilfsrahmen (1) oberhalb eines Fahrzeugrahmens (3) angeordnet ist, umfassend wenigstens eine Befestigungsvorrichtung (4) mit einem unteren Anschlagbereich (5) und einem oberen Anschlagbereich (6) zur Verbindung des Hilfsrahmens (2) mit dem Fahrzeugrahmen (3), wobei der untere Anschlagbereich (5) der wenigstens einen Befestigungsvorrichtung (4) mit dem Fahrzeugrahmen (3) verbindbar oder verbunden ist, wobei der obere Anschlagbereich (6) der wenigstens einen Befestigungsvorrichtung (4) an wenigstens einer zu dem oberen Anschlagbereich (6) korrespondierenden Anlagevorrichtung (7) des Hilfsrahmens (1) anliegt, wobei der Hilfsrahmen (1) durch das Anliegen der wenigstens einen Befestigungsvorrichtung (4) an der wenigstens einen Anlagevorrichtung (7) gegenüber der wenigstens einen Befestigungsvorrichtung (4) in einer Längsrichtung (8) bewegbar ist und gegenüber dem Fahrzeugrahmen (3) in einer Vertikalrichtung (9) entgegen einer Bewegung in Vertikalrichtung (9) und/oder in einer Querrichtung (10) entgegen einer Bewegung in Querrichtung (10) gestützt wird.

## Beschreibung

Die Erfindung betrifft einen Hilfsrahmen für ein Fahrzeug, insbesondere Forstanhänger oder Holztransporter, wobei der Hilfsrahmen oberhalb eines Fahrzeugrahmens angeordnet ist, umfassend wenigstens eine Befestigungsvorrichtung mit einem unteren Anschlagbereich und einem oberen Anschlagbereich zur Verbindung des Hilfsrahmens mit dem Fahrzeugrahmen, wobei der untere Anschlagbereich der wenigstens einen Befestigungsvorrichtung mit dem Fahrzeugrahmen verbindbar oder verbunden ist.

Eine solcher Hilfsrahmen umfassend eine Befestigungsvorrichtung, welche über eine Schraubverbindung mit einem Fahrzeugrahmen verbunden ist, ist bereits aus der Schrift EP 3 069 925 B1 bekannt. Die Befestigungsvorrichtung ist in Form eines Bleches mit Langlöchern ausgebildet und über eine Schweißverbindung mit dem Hilfsrahmen verbunden, wobei über eine Längsausdehnung der Langlöcher die Befestigungsvorrichtung relativ zum Fahrzeugrahmen bewegbar ist. Die Langlöcher sind in Längsrichtung des Fahrzeugrahmens ausgerichtet, wodurch eine translatorische Bewegung des Hilfsrahmens mit der angeschweißten Befestigungsvorrichtung auf dem Fahrzeugrahmen ermöglicht wird.

Nachteilig am Stand der Technik ist, dass durch eine Schweißverbindung am Hilfsrahmen auch geringfügigen Bewegungen des Hilfsrahmens in eine Richtung quer zur Längsrichtung des Fahrzeugrahmens unterbunden werden. Durchbiegungen des Hilfsrahmens in eine Vertikalrichtung oder in eine Querrichtung schädigen eine Schweißnaht der Schweißverbindung, da die Schweißnaht mechanisch die schwächste Komponente der konstruktiven Ausgestaltung darstellt. Zudem muss eine Länge der Langlöcher sowie die Dimensionierung und Anzahl an Schrauben der Schraubverbindung exakt an die Gegebenheiten während des Gebrauches des Fahrzeuges angepasst werden, was bei geänderten Bedingungen eine reduzierte Flexibilität des Fahrzeuges bedingt. Des Weiteren sind ein Montageaufwand sowie ein Demontageaufwand durch die hohe Anzahl an Schrauben in der Schraubverbindung und die schwer zugänglichen Bereiche innerhalb des Fahrzeugrahmens erhöht, wodurch ein geringer Komfort bei der Benutzung des Fahrzeuges bedingt ist.

Die objektiv technische Aufgabe der vorliegenden Erfindung besteht daher darin, einen gegenüber dem Stand der Technik verbesserten Hilfsrahmen anzugeben, bei welchem die Nachteile des Standes der Technik zumindest teilweise behoben sind, und welcher sich insbesondere durch einen verbesserten Übergang zwischen Hilfsrahmen und Fahrzeugrahmen über eine verbesserte Befestigungsvorrichtung auszeichnet.

Diese Aufgabe wird durch die Merkmale des Anspruches 1 gelöst.

Es ist demnach erfindungsgemäß vorgesehen, dass der obere Anschlagbereich der wenigstens einen Befestigungsvorrichtung an wenigstens einer zu dem oberen Anschlagbereich korrespondierenden Anlagevorrichtung des Hilfsrahmens anliegt, wobei der Hilfsrahmen durch das Anliegen der wenigstens einen Befestigungsvorrichtung an der wenigstens einen Anlagevorrichtung gegenüber der wenigstens einen Befestigungsvorrichtung in einer Längsrichtung bewegbar ist und gegenüber dem Fahrzeugrahmen in einer Vertikalrichtung entgegen einer Bewegung in Vertikalrichtung und/oder in einer Querrichtung entgegen einer Bewegung in Querrichtung gestützt wird.

Dadurch wird erst ermöglicht, dass eine flexible Verbindung zwischen Hilfsrahmen und Fahrzeugrahmen generiert werden kann, wobei der Hilfsrahmen in Querrichtung und/oder in Vertikalrichtung gehalten wird, ohne dass geringfügige Bewegungen in Querrichtung und/oder in Vertikalrichtung vollständig unterbunden werden.

Nach einer Beendigung beispielsweise von Durchbiegungen und/oder Verwringungen, welche ursächlich sein können für eine Bewegung des Hilfsrahmens, kann der Hilfsrahmen durch die wenigstens eine Befestigungsvorrichtung wieder in eine ursprüngliche Positionierung auf dem Fahrzeugrahmen übergehen.

Hinzu kommt die positive Eigenschaft, dass der Hilfsrahmen in Längsrichtung entlang des Fahrzeugrahmens abgesehen von Haft- und Gleitreibungskräften im Wesentlichen frei bewegbar ist. Eine Führung in Längsrichtung wird durch eine Kontaktfläche zwischen der wenigstens einen schubweichen Konsole und der wenigstens einen korrespondierenden Lasche gewährleistet. Eine gesonderte Führung beispielsweise durch Langlöcher wie im Stand der Technik ist hierbei nicht notwendig.

Die Haft- oder Gleitreibungskräften können jedoch beispielsweise über Oberflächenbeschaffenheiten der wenigstens einen Anlagevorrichtung und/oder der wenigstens einen Befestigungsvorrichtung ein Maß aufweisen, welches ein ungewünschtes Verrutschen des Hilfsrahmens auf dem Fahrzeugrahmen hemmen. Hierbei können beispielsweise die Oberflächenrauigkeiten manipuliert werden, eine Zwischenschicht zwischen der wenigstens einen Befestigungskomponente und der wenigstens einen Anlagevorrichtung eingefügt und/oder eine Beschichtung auf die wenigstens eine Befestigungskomponente und/oder der wenigstens einen Anlagevorrichtung aufgetragen werden.

Über die wenigstens eine Befestigungskomponente sind Lasten des Hilfsrahmens auf den Fahrzeugrahmen übertragbar. Die Lasten sind hierbei nicht auf schwerkraftbedingte Lasten beschränkt, sondern können beispielsweise eine Durchbiegung des Hilfsrahmens in wenigstens eine der drei Raumrichtungen umfassen.

Vorteilhafte Ausführungsformen der Erfindung sind in den abhängigen Ansprüchen definiert.

Gemäß einer vorteilhaften Ausgestaltung der Erfindung ist vorgesehen, dass der obere Anschlagbereich in einen Raum innerhalb einer Außenkante eines Hilfsrahmenbodens ragt.

Dadurch wird ermöglicht, dass hohe Vertikalkräfte durch die wenigstens eine Befestigungskomponente auf den Fahrzeugrahmen besonders begünstigt übertragen werden können.

Vorteilhafter Weise ist vorgesehen, dass die wenigstens eine Befestigungsvorrichtung schubweich ausgebildet ist.

Dadurch wird ermöglicht, dass die wenigstens eine Befestigungskomponente bei einer Belastung in Querrichtung und/oder in Vertikalrichtung elastisch verformbar ist und Bewegungen in Querrichtung und/oder in Vertikalrichtung nicht vollständig gehemmt werden.

Der Fachterminus schubweich bedeutet, dass eine Komponente bei einer Belastung in einer Querschnittsebene - beispielsweise bei einer Durchbiegung - den auftretenden Schubkräften entgegenwirkt, wobei die Komponente durch die auftretenden Schubkräfte jedoch elastisch verformbar ist.

Ein Maß der Schubweiche kann beispielsweise über die Materialstärke der wenigstens einen Befestigungsvorrichtung und/oder eine bauliche Größe eines Verstärkungsbleches und/oder materialspezifische Charakteristika wie einer Materialzusammensetzung adjustiert werden.

Gemäß einer vorteilhaften Ausführungsform der Erfindung ist vorgesehen, dass der obere Anschlagbereich und der untere Anschlagbereich der wenigstens einen Befestigungsvorrichtung einen erhabenen Winkel, bevorzugt einen erhabenen Winkel zwischen 90 ° und 170 °, besonders bevorzugt zwischen 125 ° und 150 °, einschließen..

Dadurch wird eine Kraftübertragung des Hilfsrahmens über die wenigstens eine Befestigungskomponente auf den Fahrzeugrahmen in Vertikalrichtung besonders begünstigt.

Als günstig hat sich erwiesen, dass der erhabene Winkel bei einer Bewegung des Hilfsrahmens in der Vertikalrichtung und/oder in der Querrichtung des Fahrzeugrahmens um einen Winkelbereich von maximal 5 °, vorzugsweise von maximal 3 °, erhöhbar ist.

Dadurch wird eine flexible Verbindung des Hilfsrahmens mit dem Fahrzeugrahmen über die wenigstens eine Befestigungsvorrichtung ermöglicht, wobei kleinere Bewegungen - beispielsweise in Form einer Durchbiegung und/oder einer Verwringung - ermöglicht und größere Bewegungen durch die wenigstens eine Befestigungsvorrichtung durch eine Abstützung des Hilfsrahmens über die wenigstens eine Anlagevorrichtung an der wenigstens einen Befestigungsvorrichtung gehemmt werden.

Als vorteilhaft hat sich erwiesen, dass die wenigstens eine Anlagevorrichtung stoffschlüssig und/oder über eine Schraubverbindung mit dem Hilfsrahmen verbunden ist.

Dadurch wird ein Verrutschen der wenigstens einen Anlagevorrichtung bei hohen Beanspruchungen durch den Hilfsrahmen verhindert.

Eine vorteilhafte Variante besteht darin, dass die wenigstens eine Anlagevorrichtung eine U-Form aufweist, wobei ein oberer Bereich der U-Form an der wenigstens einen Befestigungsvorrichtung anordenbar oder angeordnet ist und ein unterer Bereich der U-Form, vorzugsweise stoffschlüssig und/oder über eine Schraubverbindung, an dem Hilfsrahmen anordenbar oder angeordnet ist.

Eine U-Form bedingt eine kompakte Anlagevorrichtung, wobei wenig Material zur Herstellung der Anlagevorrichtung benötigt wird. Zudem bietet die Geometrie eine besonders günstige Anordnung zwischen der wenigstens einen Befestigungsvorrichtung und dem Hilfsrahmen.

Besonders bevorzugt ist, dass wenigstens ein Versteifungsblech an einer Mantelfläche der wenigstens einen Befestigungsvorrichtung, vorzugsweise stoffschlüssig, angeordnet ist.

Durch wenigstens ein Versteifungsblech kann eine Steifigkeit der wenigstens einen Befestigungsvorrichtung angepasst werden, wobei eine Schubweiche der wenigstens einen Befestigungsvorrichtung je nach Dimensionierung und/oder Ausgestaltung des wenigstens einen Versteifungsbleches höher oder niedriger eingestellt werden kann.

Besonders bevorzugt erstreckt sich das wenigstens eine Versteifungsblech zumindest bereichsweise über den oberen Anschlagbereich und den unteren Anschlagbereich. Die Orientierung des wenigstens einen Versteifungsbleches ist im Allgemeinen beliebig.

Bei einem Ausführungsbeispiel der Erfindung ist vorgesehen, dass der untere Anschlagbereich über wenigstens eine Schraubverbindung mit dem Fahrzeugrahmen lösbar verbindbar oder verbunden ist.

Durch wenigstens eine Schraubverbindung ist die wenigstens eine Befestigungsvorrichtung besonders einfach von dem Fahrzeugrahmen abnehmbar und bedingt in Gebrauchsstellung eine Fixierung der wenigstens einen Befestigungsvorrichtung an dem Fahrzeugrahmen.

Wenn der untere Anschlagbereich mit dem Fahrzeugrahmen, vorzugsweise über eine Schweißverbindung, stoffschlüssig verbunden ist, ist eine lagesichere sowie feste Positionierung der Befestigungsvorrichtung am Fahrzeugrahmen gegeben.

Als günstig hat sich erwiesen, dass wenigstens eine Befestigungsvorrichtung an beiden parallel zur Längsrichtung orientierten Seitenflächen des Fahrzeugrahmens angeordnet sind.

Dadurch wird eine Kraftübertragung des Hilfsrahmens über die wenigstens eine Befestigungskomponente auf den Fahrzeugrahmen in Querrichtung besonders begünstigt, wobei eine Abstützung des Hilfsrahmens an der wenigstens einen Befestigungskomponente beidseitig generiert werden kann.

In einer vorteilhaften Variante ist vorgesehen, dass entlang einer Seitenfläche des Fahrzeugrahmens wenigstens zwei voneinander beabstandete Befestigungsvorrichtungen angeordnet sind.

Dadurch kann eine Hebelwirkung bedingt durch einen wirkenden Hebelarm zwischen den beabstandeten Befestigungsvorrichtungen ausgenützt werden.

Gemäß einer vorteilhaften Ausführungsform der Erfindung ist vorgesehen, dass ausgehend von einem Fahrzeughaus die ersten Befestigungsvorrichtungen eine höhere Steifigkeit aufweisen als die weiteren Befestigungsvorrichtungen.

Dadurch kann eine zulässige Durchbiegung und/oder Verwringung des Hilfsrahmens in Längsrichtung eingestellt werden. Dies hat sowohl einen sicherheitstechnischen als auch einen wirtschaftlichen Vorteil, da in Richtung des Fahrzeughauses geringe Durchbiegungen und/oder Verwringungen des Hilfsrahmens und gleichzeitig abseits des Fahrzeughauses höhere Durchbiegungen zugelassen werden können.

Es ist jedoch auch möglich, dass die wenigstens eine Befestigungsvorrichtung derart starr ausgebildet ist, dass im Wesentlichen jegliche Durchbiegungen und/oder Verwringung des Hilfsrahmens unterbunden werden.

In Längsrichtung ist der Hilfsrahmen gegenüber der wenigstens einen Befestigungsvorrichtung beweglich und wird durch ein Zusammenwirken der wenigstens einen Befestigungsvorrichtung und der wenigstens einen Anlagevorrichtung geführt.

Besonders bevorzugt ist, dass am Fahrzeugrahmen und/oder am Hilfsrahmen ein Kran angeordnet ist.

Dadurch wird ermöglicht, dass das Fahrzeug zum Verladen von land- oder forstwirtschaftlichen Gütern geeignet ist.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a: einen Forstanhänger mit einem über einem Fahrzeugrahmen angeordneten Hilfsrahmen in einer schematisch dargestellten Ansicht von der Rückseite,
- Fig. 1b: einen Holztransporter mit einem über einem Fahrzeugrahmen angeordneten Hilfsrahmen, wobei am Fahrzeugrahmen und Hilfsrahmen zwei Befestigungsvorrichtungen angeordnet sind, in einer schematisch dargestellten Ansicht von der Seite,
- Fig. 2: eine Befestigungsvorrichtung gemäß einem bevorzugten Ausführungsbeispiel, wobei die Befestigungsvorrichtung über eine Schraubverbindung an einem Fahrzeugrahmen und an einer Anlagevorrichtung eines Hilfsrahmens angeordnet ist, in einer Ansicht von der Seite,
- Fig. 3: die Befestigungsvorrichtung gemäß dem Ausführungsbeispiel nach Fig. 2 in einer Ansicht von der Vorderseite.

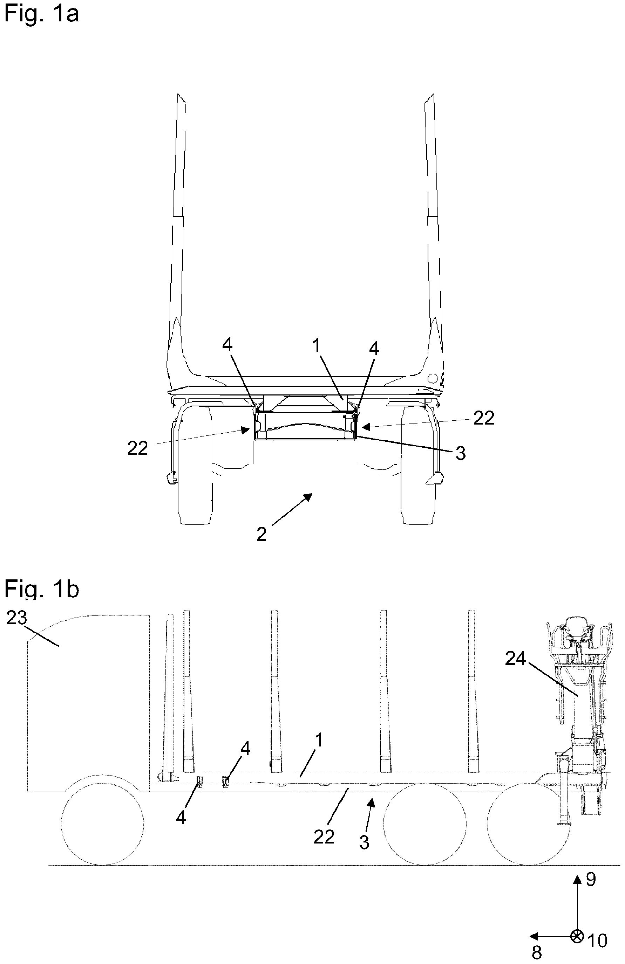

Fig. 1a zeigt ein Fahrzeug 2 in Form eines Forstanhängers, wobei ein Hilfsrahmen 1 oberhalb eines Fahrzeugrahmens 3 angeordnet ist. In der Darstellung ist die Rückseite des Fahrzeuges 2 ersichtlich, wobei anzwei Seitenflächen 22 des Fahrzeugrahmens 3 des Fahrzeuges 2 zwei Befestigungsvorrichtungen 4 angeordnet sind, wobei die zwei Befestigungsvorrichtungen 4 an dem Fahrzeugrahmen 3 und dem Hilfsrahmen 1 angeordnet sind. Im Allgemeinen können auch zusätzliche Befestigungsvorrichtungen 4 an der Rückseite und/oder der Vorderseite des Fahrzeuges 2 angeordnet werden.

Die Anzahl der Befestigungsvorrichtungen 4 ist im Allgemeinen beliebig. Besonders bevorzugt werden zwei Befestigungsvorrichtungen 4 verwendet, wobei jeweils eine Befestigungsvorrichtung 4 an einer Seitenfläche 22 des Fahrzeugrahmens 3 angeordnet ist.

Fig. 1b zeigt ein Fahrzeug 2 in Form eines Holztransporters, wobei oberhalb des Hilfsrahmens 1 ein Kran 24 an einem einem Fahrzeughaus 23 abgewandten Ende des Hilfsrahmens 1 angeordnet ist. Der Hilfsrahmen 1 ist auf dem Fahrzeugrahmen 3 angeordnet und über vier Befestigungsvorrichtungen 4 (zwei Befestigungsvorrichtungen 4 befinden sich an der nicht ersichtlichen abgewandten Seite des Fahrzeuges 2) mit dem Hilfsrahmen 1 verbunden, wobei die vier Befestigungsvorrichtungen 4 an dem Fahrzeugrahmen 3 verschraubt sind und in Kontakt mit dem Hilfsrahmen 1 stehen.

An beiden parallel zu einer Längsrichtung 8 orientierten Seitenflächen 22 des Fahrzeugrahmens 3 sind zwei der vier Befestigungsvorrichtungen 4 angeordnet. Entlang einer Seitenfläche 22 des Fahrzeugrahmens 3 sind zwei voneinander beabstandete Befestigungsvorrichtung 4 angeordnet. Die Anzahl der Befestigungsvorrichtungen 4 ist im Allgemeinen beliebig und kann an die Erfordernisse des Fahrzeuges 2 beispielsweise für einen Einsatz zum Verladen von land- oder forstwirtschaftlichen Gütern angepasst werden.

Ausgehend von dem Fahrzeughaus 23 weist die ersten zwei Befestigungsvorrichtungen 4 eine höhere Steifigkeit auf als die weiteren zwei Befestigungsvorrichtungen 4. Ein Maß der Steifigkeit der Befestigungsvorrichtungen 4 kann beispielsweise durch eine Materialstärke insbesondere von Blechen der Befestigungsvorrichtungen 4, eine Dimensionierung der Befestigungsvorrichtungen 4, eine Befestigungsart der Befestigungsvorrichtungen 4 (zum Beispiel Anzahl an Verschraubungen) oder über Versteifungsbleche 19 adjustiert werden.

An dem Fahrzeughaus 23 abgewandten Ende des Hilfsrahmens 1 ist der Hilfsrahmen 1 mit dem Fahrzeugrahmen 3 verschraubt, wodurch eine Bewegung des Hilfsrahmens 1 relativ zu dem Fahrzeugrahmen 3 in Längsrichtung 8 gehemmt wird. Bei einer Durchbiegung oder Verwringung des Hilfsrahmens 1 können geringfügig auftretende Bewegungen (beispielsweise im Bereich 1 mm) des Hilfsrahmens 2 gegenüber den Befestigungsvorrichtungen 4 trotz der Verschraubung des Fahrzeugrahmens 3 mit dem Hilfsrahmen 1 in Längsrichtung 8 entlang der Befestigungsvorrichtungen 4 vonstattengehen.

Der Hilfsrahmen 1 ist durch die Verschraubung an dem Fahrzeughaus 23 abgewandten Ende im Wesentlichen starr verbunden, wobei an einem dem Fahrzeughaus 23 zugewandten Ende eine sowohl (über drei translatorische Freiheitsgrade) flexible als auch (über zwei translatorische Freiheitsgrade) sichere Verbindung des Hilfsrahmens 1 mit dem Fahrzeugrahmen 3 über die Befestigungsvorrichtungen 4 ermöglicht wird.

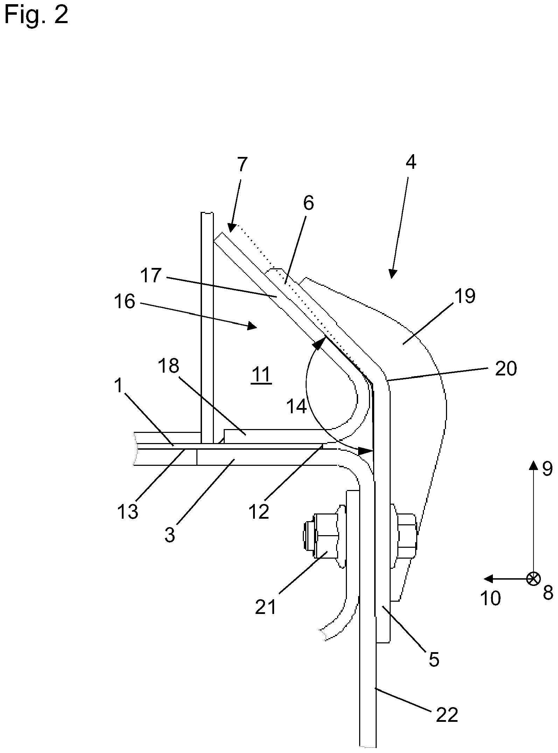

Fig. 2 zeigt einen Ausschnitt eines Hilfsrahmens 1, umfassend eine Befestigungsvorrichtung 4 mit einem unteren Anschlagbereich 5 und einem oberen Anschlagbereich 6 zur Verbindung des Hilfsrahmens 2 mit einem Fahrzeugrahmen 3. Normal zur Bildebene können weitere Befestigungsvorrichtungen 4 angeordnet sein, welche durch die dargestellte Befestigungsvorrichtung 4 verdeckt werden.

Der untere Anschlagbereich 5 der Befestigungsvorrichtung 4 ist mit dem Fahrzeugrahmen 3 lösbar über zwei Schraubverbindung 21 (die zweite Schraubverbindung 21 ist in der Darstellung verdeckt) verbunden, wobei der obere Anschlagbereich 6 der Befestigungsvorrichtung 4 an einer zu dem oberen Anschlagbereich 6 korrespondierenden Anlagevorrichtung 7 des Hilfsrahmens 1 anliegt. Im Allgemeinen kann der untere Anschlagbereich 5 jedoch auch beispielsweise über eine Schweißverbindung stoffschlüssig mit dem Fahrzeugrahmen verbunden sein.

Der Hilfsrahmen 1 ist durch das Anliegen der Befestigungsvorrichtung 4 an der Anlagevorrichtung 7 gegenüber der Befestigungsvorrichtung 4 in einer Längsrichtung 8 bewegbar und wird gegenüber dem Fahrzeugrahmen 3 in einer Vertikalrichtung 9 entgegen einer Bewegung in Vertikalrichtung 9 und in einer Querrichtung 10 entgegen einer Bewegung in Querrichtung 10 gestützt.

Somit sind Bewegungen des Hilfsrahmens 1 in Vertikalrichtung 9 sowie in Querrichtung 10 nicht frei gegenüber dem Fahrzeugrahmen 3 generierbar, jedoch werden geringfügige Bewegungen des Hilfsrahmens 1 in Vertikalrichtung 9 und in Querrichtung 10 durch der Anordnung der Befestigungsvorrichtungen 4 an dem Hilfsrahmen 1 und dem Fahrzeugrahmen 3 zugelassen.

Der obere Anschlagbereich 6 ragt in einen Raum 11 innerhalb einer Außenkante 12 eines Hilfsrahmenbodens 13.

Der obere Anschlagbereich 6 und der untere Anschlagbereich 5 der Befestigungsvorrichtung 4 schließen einen erhabenen Winkel 14 von 135 ° ein. Der erhabene Winkel 14 ist bei einer Bewegung des Hilfsrahmens 1 in der Vertikalrichtung 9 und in der Querrichtung 10 des Fahrzeugrahmens 3 um einen Winkelbereich von maximal 5 ° auf einen erhabenen Winkel 14 von maximal 140° erhöhbar (angedeutet durch eine punktierte Linie).

Die Anlagevorrichtung 7 ist stoffschlüssig über eine Schweißnaht mit dem Hilfsrahmen 1 verbunden. Die Anlagevorrichtung 7 kann jedoch auch beispielsweise über eine Schraubverbindung 21 und/oder eine Klemmverbindung mit dem Hilfsrahmen 1 verbunden und/oder als Teil des Hilfsrahmens 1 ausgebildet sein.

Die Anlagevorrichtung 7 weist eine U-Form 16 auf, wobei ein oberer Bereich 17 der U-Form 16 an der Befestigungsvorrichtung 4 angeordnet ist und ein unterer Bereich 18 der U-Form 16 stoffschlüssig an dem Hilfsrahmen 1 angeordnet ist.

Der obere Bereich 17 steht in Kontakt mit dem Hilfsrahmen 1. Es ist jedoch auch möglich, dass am Hilfsrahmen 1 ein Rückhalteelement beispielsweise in Form eines stoffschlüssig am Hilfsrahmen 1 angeordneten Bleches vorliegt, an welchem sich die Anlagevorrichtung 7 bei einer Durchbiegung des Fahrzeugrahmens 3 und/oder des Hilfsrahmens 1 abstützen kann.

Verbiegt sich bei einem vorhandenen Rückhalteelement beispielsweise der Hilfsrahmen 1 relativ zu der Anlagevorrichtung 7, so kann einer weiteren Durchbiegung durch das Rückhalteelement entgegengewirkt werden, wodurch eine ungewünscht hohe Durchbiegung und/oder Verwringung des Hilfsrahmens besonders begünstigt gehemmt respektive verhindert werden kann.

Der untere Anschlagbereich 5 ist mit dem Fahrzeugrahmen 3 lösbar über eine Schraubverbindung 21 verbunden. Der untere Anschlagbereich 5 kann jedoch auch an dem Fahrzeugrahmen 3 angeschweißt, angelötet oder über eine anderweitige stoffschlüssige Verbindung mit dem Fahrzeugrahmen 3 verbunden sein.

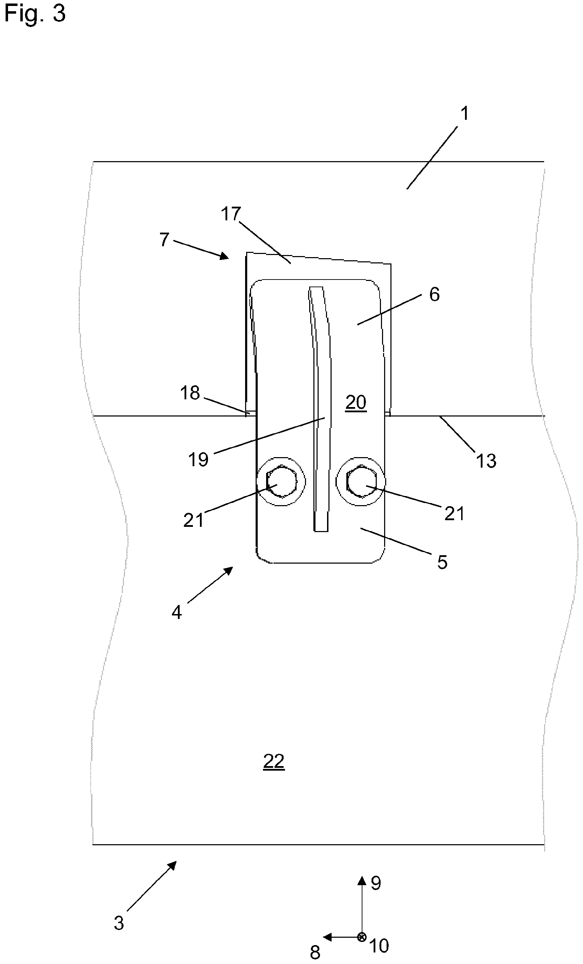

Fig. 3 zeigt Fig. 2 in einer um 90° um die Vertikalrichtung 9 gedrehten Darstellung der Befestigungsvorrichtung 4 an einem Ausschnitt des Hilfsrahmens 4 und des Fahrzeugrahmens 3 angeordnet.

Die Befestigungsvorrichtung 4 ist schubweich ausgebildet. Auftretende Scherkräfte in der Befestigungsvorrichtung 4 durch eine Bewegung des Hilfsrahmens 1 in Querrichtung 10 und/oder in Vertikalrichtung 9 werden teilweise durch eine elastische Verformung der Befestigungsvorrichtung 4 - im Wesentlichen durch ein Aufspreizen des erhabenen Winkels 14 zwischen dem oberen Anschlagbereich 6 und dem unteren Anschlagbereich 5 - zugelassen und teilweise an den Fahrzeugrahmen 3 übertragen, wobei durch einen Kraftschluss zwischen Befestigungsvorrichtung 4 und dem Fahrzeugrahmen 3 auftretende Kräfte von dem Fahrzeugrahmen 3 aufgenommen werden können.

Ein Versteifungsblech 19 ist an einer Mantelfläche 20 der Befestigungsvorrichtung 4 stoffschlüssig über eine Schweißverbindung (in der Darstellung aus Übersichtlichkeitsgründen nicht ersichtlich) angeordnet.

Der untere Anschlagbereich 5 ist über zwei Schraubverbindungen 21 mit dem Fahrzeugrahmen 3 verbunden. Im Allgemeinen kann der untere Anschlagbereich 5 jedoch auch über andere Befestigungsmittel am Fahrzeugrahmen 3 befestigt sein.

### Bezugszeichenliste:

- 1: Hilfsrahmen
- 2: Fahrzeug
- 3: Fahrzeugrahmen
- 4: Befestigungsvorrichtung
- 5: unterer Anschlagbereich
- 6: oberer Anschlagbereich
- 7: Anlagevorrichtung
- 8: Längsrichtung
- 9: Vertikalrichtung
- 10: Querrichtung
- 11: Raum
- 12: Außenkante
- 13: Hilfsrahmenbodens
- 14: erhabener Winkel
- 16: U-Form
- 17: oberer Bereich
- 18: unterer Bereich
- 19: Versteifungsblech
- 20: Mantelfläche
- 21: Schraubverbindung
- 22: Seitenflächen
- 23: Fahrzeughaus
- 24: Kran

## Patentansprüche

1. Hilfsrahmen (1) für ein Fahrzeug (2), insbesondere Forstanhänger oder Holztransporter, wobei der Hilfsrahmen (1) oberhalb eines Fahrzeugrahmens (3) angeordnet ist, umfassend wenigstens eine Befestigungsvorrichtung (4) mit einem unteren Anschlagbereich (5) und einem oberen Anschlagbereich (6) zur Verbindung des Hilfsrahmens (2) mit dem Fahrzeugrahmen (3), wobei der untere Anschlagbereich (5) der wenigstens einen Befestigungsvorrichtung (4) mit dem Fahrzeugrahmen (3) verbindbar oder verbunden ist, **dadurch gekennzeichnet, dass** der obere Anschlagbereich (6) der wenigstens einen Befestigungsvorrichtung (4) an wenigstens einer zu dem oberen Anschlagbereich (6) korrespondierenden Anlagevorrichtung (7) des Hilfsrahmens (1) anliegt, wobei der Hilfsrahmen (1) durch das Anliegen der wenigstens einen Befestigungsvorrichtung (4) an der wenigstens einen Anlagevorrichtung (7) gegenüber der wenigstens einen Befestigungsvorrichtung (4) in einer Längsrichtung (8) bewegbar ist und gegenüber dem Fahrzeugrahmen (3) in einer Vertikalrichtung (9) entgegen einer Bewegung in Vertikalrichtung (9) und/oder in einer Querrichtung (10) entgegen einer Bewegung in Querrichtung (10) gestützt wird.

2. Hilfsrahmen (1) nach Anspruch 1, wobei der obere Anschlagbereich (6) in einen Raum (11) innerhalb einer Außenkante (12) eines Hilfsrahmenbodens (13) ragt.

3. Hilfsrahmen (1) nach Anspruch 1 oder 2, wobei die wenigstens eine Befestigungsvorrichtung (4) schubweich ausgebildet ist.

4. Hilfsrahmen (1) nach einem der vorangehenden Ansprüche, wobei der obere Anschlagbereich (6) und der untere Anschlagbereich (5) der wenigstens einen Befestigungsvorrichtung (4) einen erhabenen Winkel (14), bevorzugt einen erhabenen Winkel (14) zwischen 90 ° und 170 °, besonders bevorzugt zwischen 125 ° und 150 °, einschließen.

5. Hilfsrahmen (1) nach Anspruch 4, wobei der erhabene Winkel (14) bei einer Bewegung des Hilfsrahmens (1) in der Vertikalrichtung (9) und/oder in der Querrichtung (10) des Fahrzeugrahmens (3) um einen Winkelbereich von maximal 5 °, vorzugsweise von maximal 3 °, erhöhbar ist.

6. Hilfsrahmen (1) nach einem der vorangehenden Ansprüche, wobei die wenigstens eine Anlagevorrichtung (7) stoffschlüssig und/oder über eine Schraubverbindung (21) mit dem Hilfsrahmen (1) verbunden oder verbindbar ist.

7. Hilfsrahmen (1) nach einem der vorangehenden Ansprüche, wobei die wenigstens eine Anlagevorrichtung (7) eine U-Form (16) aufweist, wobei ein oberer Bereich (17) der U-Form (16) an der wenigstens einen Befestigungsvorrichtung (4) anordenbar oder angeordnet ist und ein unterer Bereich (18) der U-Form (16), vorzugsweise stoffschlüssig und/oder über eine Schraubverbindung (21), an dem Hilfsrahmen (1) anordenbar oder angeordnet ist.

8. Hilfsrahmen (1) nach einem der vorangehenden Ansprüche, wobei wenigstens ein Versteifungsblech (19) an einer Mantelfläche (20) der wenigstens einen Befestigungsvorrichtung (4), vorzugsweise stoffschlüssig, angeordnet ist.

9. Hilfsrahmen (1) nach einem der vorangehenden Ansprüche, wobei der untere Anschlagbereich (5) über wenigstens eine Schraubverbindung (21) mit dem Fahrzeugrahmen (3) lösbar verbindbar oder verbunden ist.

10. Hilfsrahmen (1) nach einem der Ansprüche 1 bis 8, wobei der untere Anschlagbereich (5) mit dem Fahrzeugrahmen (3), vorzugsweise über eine Schweißverbindung, stoffschlüssig verbunden ist.

11. Hilfsrahmen (1) nach einem der vorangehenden Ansprüche, wobei wenigstens eine Befestigungsvorrichtung (4) an beiden parallel zur Längsrichtung (8) orientierten Seitenflächen (22) des Fahrzeugrahmens (3) angeordnet sind.

12. Hilfsrahmen (1) nach einem der vorangehenden Ansprüche, wobei entlang einer Seitenfläche (22) des Fahrzeugrahmens (3) wenigstens zwei voneinander beabstandete Befestigungsvorrichtungen (4) angeordnet sind.

13. Hilfsrahmen (1) nach Anspruch 11 oder 12, wobei ausgehend von einem Fahrzeughaus (23) die ersten Befestigungsvorrichtungen (4) eine höhere Steifigkeit aufweisen als die weiteren Befestigungsvorrichtungen (4).

14. Hilfsrahmen (1) nach einem der vorangehenden Ansprüche, wobei am Fahrzeugrahmen (3) und/oder am Hilfsrahmen (1) ein Kran (24) angeordnet ist.
